# EUROPEAN PATENT SPECIFICATION

(11) **EP 4 369 156 B1**
(45) Date of publication and mention of the grant of the patent: **25.06.2025**
(21) Application number: 21953510.1
(22) Date of filing: 13.08.2021
(51) Int. Cl.: G06F 3/0338, G05G 9/047, G05G 5/05

(54) **DIRECTION INPUT DEVICE AND CONTROLLER**
RICHTUNGSEINGABEVORRICHTUNG UND STEUERUNG
DISPOSITIF D'ENTRÉE DE DIRECTION ET DISPOSITIF DE COMMANDE

(43) Date of publication of application: 15.05.2024
(73) Proprietor: Nintendo Co., Ltd., Kyoto-shi, Kyoto 601-8501 (JP)
(72) Inventor: FURUIKE, Hironori, Kyoto-shi, Kyoto 601-8501 (JP)
(74) Representative: von Tietzen und Hennig, Nikolaus
(86) International application number: PCT/JP2021/029814
(87) International publication number: WO 2023/017615

(56) References cited:
- EP-B1- 0 903 658
- WO-A1-2020/090535
- JP-A- 2001 290 593
- JP-A- 2001 290 593
- JP-A- 2011 233 435
- JP-A- 2011 233 435
- JP-A- 2021 051 908
- US-A- 4 408 103

## Description

### TECHNICAL FIELD

The present disclosure relates to a direction input device and a controller.

### BACKGROUND ART

Japanese Patent Laying-Open No. 2001-22462 (PTL 1) discloses a multi-direction input device from which a detection signal corresponding to an amount of tilt of a lever member is extracted.

Document JP2021 051908A discloses a related multi-direction input device.

### CITATION LIST

### PATENT LITERATURE

PTL 1: Japanese Patent Laying-Open No. 2001-22462

### SUMMARY OF INVENTION

### TECHNICAL PROBLEM

There is a room for improvement in reduction in size in an axial direction as to the structure described in PTL 1.

### SOLUTION TO PROBLEM

A direction input device according to the present disclosure includes an input portion, a first slide portion, a second slide portion, a first slid surface, a second slid surface, and a slide biasing portion. The input portion includes an operated portion and a shaft that extends downward from the operated portion. The first slide portion slides in a first direction in response to the input portion tilting from an initial position in the first direction. The first slide portion is provided with a first hole through which the shaft passes, the first hole extending in a second direction perpendicular to the first direction. The second slide portion slides in the second direction in response to the input portion tilting from the initial position in the second direction. The second slide portion is provided with a second hole through which the shaft passes, the second hole extending in the first direction. The first slid surface extends in the first direction, the first slid surface being in a shape curved convexly upward, the first slide portion sliding over the first slid surface as the first slide portion abutting on the first slid surface from below. The second slid surface extends in the second direction, the second slid surface being in a shape curved convexly upward, the second slide portion sliding over the second slid surface as the second slide portion abutting on the second slid surface from below. The slide biasing portion is provided below the first slide portion and the second slide portion, the slide biasing portion biasing the first slide portion upward from below as pressing the first slide portion against the first slid surface and biasing the second slide portion upward from below as pressing the second slide portion against the second slid surface.

According to the direction input device according to the present disclosure, the first slide portion and the second slide portion slide over the first slid surface and the second slid surface, respectively, without a physical rotation shaft. Therefore, the direction input device can be shorter in length in the axial direction of the input portion. Furthermore, a tilt track with a degree of freedom can be designed. In addition, the slide biasing portion provided below the first slide portion and the slide portion biases the first slide portion upward from below as pressing the first slide portion against the first slid surface and biases the second slide portion upward from below as pressing the second slide portion against the second slid surface. Therefore, while wobbling at the time of slide of each of the first slide portion and the second slide portion is suppressed, the input portion can return to the initial position when the input portion is simultaneously tilted.

According to the direction input device above, the slide biasing portion may be a spring having an axial line identical to an axial line of the shaft as a central axis. The space in the direction input device can thus effectively be utilized.

According to the direction input device above, the spring may be a conical coil spring. In an example where the spring is an ordinary coil spring, in compression in the axial direction, the coil spring is superimposed in the axial direction. Since the conical coil spring radially spreads, on the other hand, superimposition of the conical coil spring in the axial direction at the time of compression in the axial direction can be suppressed. Therefore, in the case of the conical coil spring, a degree of freedom in adjustment of a load in a space at a certain height is improved. When there is a space large in a radial direction of the direction input device, the conical coil spring can be employed as the slide biasing portion to improve the degree of freedom in adjustment of the load.

According to the direction input device above, the conical coil spring may increase in diameter upward from below. Each of the first slide portion that radially extends and the second slide portion that radially extends can be supported from below in a stable manner.

According to the direction input device above, a base over which a lower end of the shaft slides may further be provided, the base being provided in a space surrounded by the slide biasing portion. The space in the direction input device can thus effectively be utilized.

According to the direction input device above, a switch provided below the base may further be provided, the switch receiving input by pressing in of the input portion downward. Pressed-in input can thus be made without reception of repulsive force from a slide biasing portion 9.

According to the direction input device above, a base biasing portion that biases the base upward may further be provided. Wobbling of the input portion and the base can thus be prevented.

According to the direction input device above, when viewed in the second direction, a width of a lower surface of the first slide portion in the first direction may decrease downward from above.

According to the direction input device above, the first slide portion may include a projecting portion that projects in the first direction from a side surface of the first slide portion, the projecting portion forming a part of a lower surface of the first slide portion. Displacement in the upward-downward direction per tilt angle at the time when the input portion is tilted is thus greater. Therefore, force for returning the input portion to the initial position can be greater.

According to the direction input device above, when viewed in the second direction, a lower surface of the first slide portion may be composed of a central region, an outer region provided above the central region and on an outer side of the central region, and a connection region located between the central region and the outer region. The connection region may be inclined upward with respect to the central region. The outer region may be inclined downward with respect to the connection region at a boundary between the outer region and the connection region.

According to the direction input device above, a support plate in contact with the first slide portion may further be provided. While the first slide portion is tilted from an initial angle to a prescribed angle, a contact located outermost in a region where the first slide portion and the support plate are in contact with each other may remain at an identical position or continuously move. When the first slide portion is tilted beyond the prescribed angle, the contact may discontinuously move outward.

According to the direction input device above, a first slider that makes a linear motion as the first slide portion slides, a second slider that makes a linear motion as the second slide portion slides, and a sensor that detects an electrical resistance that varies with a motion of each of the first slider and the second slider may further be provided.

According to the direction input device above, a first elastic body varying in thickness as the first slide portion slides, a second elastic body varying in thickness as the second slide portion slides, a pair of first electrodes provided on opposing sides of the first elastic body in a direction of thickness of the first elastic body, and a pair of second electrodes provided on opposing sides of the second elastic body in a direction of thickness of the second elastic body may further be provided.

According to the direction input device above, the first slide portion may include a first upper surface distant from the first slid surface and a first projection provided on the first upper surface, the first projection abutting on the first slid surface, and the second slide portion may include a second upper surface distant from the second slid surface and a second projection provided on the second upper surface, the second projection abutting on the second slid surface. Thus, an area of contact between the first slide portion and the first slid surface can be reduced and an area of contact between the second slide portion and the second slid surface can be reduced. Consequently, a sliding resistance between the first slide portion and the first slid surface can be lowered and a sliding resistance between the second slide portion and the second slid surface can be lowered.

According to the direction input device above, a module housing in which the first slide portion, the second slide portion, and the slide biasing portion are arranged may further be provided. Each of the first slid surface and the second slid surface may be formed on a rear surface of the module housing.

According to the direction input device above, a module housing in which the first slide portion, the second slide portion, and the slide biasing portion are arranged may further be provided. The second slid surface may be formed on a rear surface of the module housing and the first slid surface may be formed on a lower surface of the second slide portion.

A controller according to the present disclosure may include the direction input device described above and a controller housing in which the direction input device is provided. The second slid surface may be in a partially spherical shape formed such that the input portion is tilted with respect to a virtual center. The virtual center may be located on outside of the controller housing.

According to the controller according to the present disclosure, a radius of rotation of the input portion can be made larger with respect to the shape of the controller. Consequently, operability of the controller can be improved.

The controller according to the present disclosure may include the direction input device described above and a controller housing in which the direction input device is provided. The second slid surface may be in a partially spherical shape formed such that the input portion is tilted with respect to a virtual center. The virtual center may be located on outside of the direction input device and in inside of the controller housing.

According to the controller according to the present disclosure, while a radius of rotation of the input portion is large regardless of the size of the direction input device, the virtual center is located in the inside of the controller. Therefore, awkwardness at the time of the operation onto the input portion can be suppressed.

According to the controller according to the present disclosure, each of the first slid surface and the second slid surface may be formed on a rear surface of the controller housing.

According to the controller according to the present disclosure, the second slid surface may be formed on a rear surface of the controller housing and the first slid surface may be formed on a lower surface of the second slide portion.

### ADVANTAGEOUS EFFECTS OF INVENTION

According to the present disclosure, the direction input device can be reduced in size in the axial direction of the input portion.

### BRIEF DESCRIPTION OF DRAWINGS

Fig. 1 is a first schematic perspective view showing a construction of a direction input device according to a first embodiment.
Fig. 2 is a first schematic cross-sectional view of the direction input device according to the first embodiment.
Fig. 3 is a second schematic cross-sectional view of the direction input device according to the first embodiment.
Fig. 4 is a second schematic perspective view showing the construction of the direction input device according to the first embodiment.
Fig. 5 is a schematic cross-sectional view illustrating a motion of a first slide portion.
Fig. 6 is a schematic cross-sectional view illustrating a motion of a second slide portion.
Fig. 7 is a schematic perspective view showing a construction of the direction input device according to a second embodiment.
Fig. 8A is a schematic cross-sectional view showing a construction of the direction input device according to a third embodiment.
Fig. 8B is a schematic plan view showing a construction of a second sensor of the direction input device according to the third embodiment.
Fig. 9 is a schematic cross-sectional view showing a construction of the direction input device according to a fourth embodiment.
Fig. 10 is a schematic cross-sectional view showing a construction of the direction input device according to a fifth embodiment.
Fig. 11 is a schematic side view showing a construction of the direction input device according to a sixth embodiment.
Fig. 12 is a schematic side view showing a construction of the direction input device according to a seventh embodiment.
Fig. 13 is a schematic side view showing a construction of the direction input device according to an eighth embodiment.
Fig. 14 is a schematic side view showing a state in which a first slide portion of the direction input device according to the eighth embodiment is tilted by a first angle (for example, 2°).
Fig. 15 is a schematic side view showing a state in which the first slide portion of the direction input device according to the eighth embodiment is tilted by a second angle (for example, 4°) larger than the first angle.
Fig. 16 is a schematic side view showing a state in which the first slide portion of the direction input device according to the eighth embodiment is tilted by a third angle (for example, 6°) larger than the second angle.
Fig. 17 is a schematic plan view showing a construction of a controller according to the present disclosure.
Fig. 18 is a schematic cross-sectional view along the line XVIII-XVIII in Fig. 17.

### DESCRIPTION OF EMBODIMENTS

An embodiment of the present disclosure will be described in detail with reference to the drawings. The same or corresponding elements in the drawings have the same reference characters allotted and description thereof will not be repeated.

### [A. Direction Input Device]

### (First Embodiment)

An overview of a construction of a direction input device 100 according to a first embodiment will initially be described.

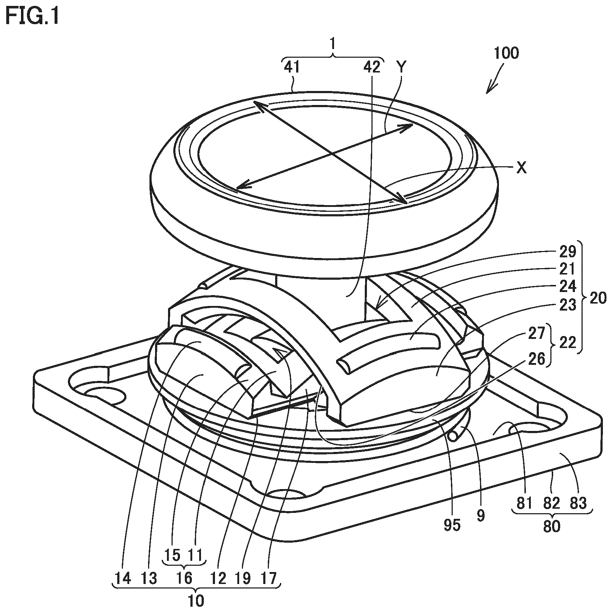

Fig. 1 is a first schematic perspective view showing the construction of direction input device 100 according to the first embodiment. As shown in Fig. 1, direction input device 100 according to the first embodiment mainly includes an input portion 1, a first slide portion 10, a second slide portion 20, a slide biasing portion 9, a support plate 95, and a lower housing portion 80. Input portion 1 is, for example, a stick. Input portion 1 mainly incudes an operated portion 41 and a shaft 42. Operated portion 41 is a portion to be operated by a user. Shaft 42 is contiguous to operated portion 41. Shaft 42 extends downward from operated portion 41.

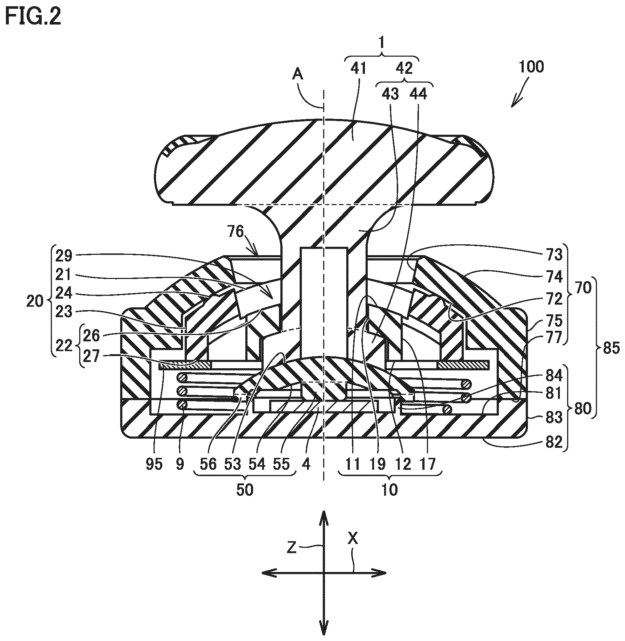

A direction from shaft 42 toward operated portion 41 is herein defined as an upward direction. In contrast, a direction from operated portion 41 toward shaft 42 is defined as a downward direction. A direction in parallel to the direction from shaft 42 toward operated portion 41 is defined as an upward-downward direction Z (see Fig. 2). Upward-downward direction Z is also referred to as an axial direction. A first direction X is a direction perpendicular to upward-downward direction Z. First direction X is, for example, a pitch direction. A second direction Y is a direction perpendicular to each of first direction X and upward-downward direction Z. Second direction Y is, for example, a roll direction.

First slide portion 10 is provided with a first hole 19 that extends in second direction Y. First hole 19 is a through hole. Shaft 42 passes through first hole 19. First slide portion 10 includes a first upper surface 16, a first lower surface 12, a first side surface 13, a third side surface 17, and a first projection 14. First upper surface 16 includes a first upper region 11 and a second upper region 15. In second direction Y, second upper region 15 is located on each of opposing sides of first upper region 11. First upper region 11 lies between second upper regions 15.

First hole 19 is provided in first upper region 11. First lower surface 12 is located opposite to first upper surface 16. First hole 19 opens in each of first upper region 11 and first lower surface 12. First side surface 13 is contiguous to each of first upper surface 16 and first lower surface 12. First side surface 13 is an end surface of first slide portion 10 in second direction Y. First side surface 13 is contiguous to second upper region 15. First side surface 13 is distant from first upper region 11. Third side surface 17 is an end surface of first slide portion 10 in first direction X. Third side surface 17 is contiguous to each of first upper region 11 and second upper region 15. First projection 14 is provided in second upper region 15. First projection 14 extends along first direction X. In second direction Y, first projection 14 is provided on each of opposing sides of first hole 19.

Second slide portion 20 is provided with a second hole 29 that extends in first direction X. Second direction Y is perpendicular to first direction X. Second hole 29 is a through hole. Shaft 42 passes through second hole 29. Second slide portion 20 includes a second upper surface 21, a second lower surface 22, a second side surface 23, and a second projection 24. Second lower surface 22 includes a first lower region 26 and a second lower region 27. In first direction X, second lower region 27 is located on each of opposing sides of first lower region 26. First lower region 26 lies between second lower regions 27.

Second hole 29 is provided in first lower region 26. Second lower surface 22 is located opposite to second upper surface 21. Second hole 29 opens in each of first lower region 26 and second upper surface 21. Second side surface 23 is contiguous to each of second upper surface 21 and second lower surface 22. Second side surface 23 is an end surface of second slide portion 20 in first direction X. Second side surface 23 is contiguous to second lower region 27. Second side surface 23 is distant from first lower region 26. Second projection 24 is provided on second upper surface 21. Second projection 24 extends along second direction Y. In first direction X, second projection 24 is provided on each of opposing sides of second hole 29.

Slide biasing portion 9 is provided on lower housing portion 80. Slide biasing portion 9 is, for example, a spring. Support plate 95 is provided on slide biasing portion 9. Support plate 95 is, for example, circular. First slide portion 10 is provided on support plate 95. First lower surface 12 of first slide portion 10 is in contact with support plate 95. Second slide portion 20 is provided on support plate 95. Second lower region 27 of second slide portion 20 is in contact with support plate 95. First lower region 26 of second slide portion 20 may be distant from support plate 95. Slide biasing portion 9 is not limited to the spring. Slide biasing portion 9 may be, for example, an elastic body with resilience, such as rubber.

Fig. 2 is a first schematic cross-sectional view of direction input device 100 according to the first embodiment. The first schematic cross-sectional view is a view along first direction X. As shown in Fig. 2, direction input device 100 according to the first embodiment further includes an upper housing portion 70, a base 50, and a switch 4. Upper housing portion 70 and lower housing portion 80 constitute a module housing 85. Upper housing portion 70 is provided with a shaft through hole 76. Shaft 42 is inserted in shaft through hole 76. Upper housing portion 70 is combined with lower housing portion 80. First slide portion 10, second slide portion 20, slide biasing portion 9, support plate 95, base 50, and switch 4 are arranged in the inside of module housing 85.

Upper housing portion 70 includes a second slid surface 72, a first inner side surface 73, a third upper surface 74, a first outer side surface 75, and a third lower surface 77. Second slid surface 72 extends in second direction Y. Second slid surface 72 is in a shape curved convexly upward. In a cross-section in parallel to each of second direction Y and upward-downward direction Z, second slid surface 72 may be in, for example, an arc shape or an elliptical arc shape. Second slid surface 72 may be in a partially spherical shape. Second slid surface 72 is a surface over which second slide portion 20 slides as abutting thereon from below. Second slid surface 72 is formed on a rear surface of upper housing portion 70.

Second projection 24 of second slide portion 20 abuts on second slid surface 72. Second upper surface 21 may be distant from second slid surface 72. Third upper surface 74 is located opposite to second slid surface 72. First inner side surface 73 is contiguous to each of third upper surface 74 and second slid surface 72. First inner side surface 73 defines shaft through hole 76. Third lower surface 77 is contiguous to first outer side surface 75. In upward-downward direction Z, first outer side surface 75 is located between third upper surface 74 and third lower surface 77. Third upper surface 74 includes a portion in a shape curved convexly upward. Second slide portion 20 does not have to include second projection 24. In this case, second upper surface 21 (see Fig. 1) of second slide portion 20 abuts on second slid surface 72.

Lower housing portion 80 includes a fourth upper surface 81, a fourth lower surface 82, a second outer side surface 83, and an attachment portion 84. Fourth upper surface 81 is opposed to second slid surface 72. Slide biasing portion 9, switch 4 portion, and base 50 are provided on fourth upper surface 81. Attachment portion 84 is located on fourth upper surface 81. Attachment portion 84 projects upward from fourth upper surface 81. Base 50 may be attached to attachment portion 84. Second outer side surface 83 is provided along first outer side surface 75. An outer portion of third lower surface 77 of upper housing portion 70 and an outer portion of fourth upper surface 81 of lower housing portion 80 abut on each other to provide a space in the inside of module housing 85.

Operated portion 41 of input portion 1 is arranged on the outside of module housing 85. Shaft 42 includes a central portion 43 and a pullout prevention portion 44. Central portion 43 is contiguous to operated portion 41. Pullout prevention portion 44 is contiguous to central portion 43. Pullout prevention portion 44 is located below central portion 43. Central portion 43 is located between operated portion 41 and pullout prevention portion 44.

Base 50 is provided below input portion 1. Base 50 is a member over which a lower end of shaft 42 slides. Base 50 includes a fifth upper surface 53, a fifth lower surface 54, an outer protrusion 56, and a central protrusion 55. Fifth upper surface 53 is in a shape curved convexly upward. The lower end of shaft 42 slides along fifth upper surface 53. The lower end of shaft 42 is formed in conformity with fifth upper surface 53 of base 50. Specifically, the lower end of shaft 42 is in a shape curved concavely upward. Fifth lower surface 54 is located opposite to fifth upper surface 53.

Each of outer protrusion 56 and central protrusion 55 is provided on fifth lower surface 54. Outer protrusion 56 is located on the outside of central protrusion 55. In the present embodiment, base 50 is attached to attachment portion 84 such that an inner peripheral surface of outer protrusion 56 and an outer peripheral surface of attachment portion 84 are opposed to each other. Central protrusion 55 is located on a straight line along central portion 43. Base 50 is provided in a space surrounded by slide biasing portion 9. Slide biasing portion 9 may be a spring that has an axial line A the same as an axial line of shaft 42, as a central axis. Specifically, slide biasing portion 9 may be a helical coil spring that surrounds axial line A. Axial line A may pass through operated portion 41, shaft 42, central protrusion 55, and switch 4. Axial line A is in parallel to upward-downward direction Z.

Switch 4 is provided below base 50. Switch 4 is arranged at a position opposed to central protrusion 55 of base 50. Switch 4 receives input as input portion 1 is pressed in downward. Specifically, input portion 1 may be pressed in downward, so that central protrusion 55 of base 50 moves downward to press switch 4 in. After central protrusion 55 presses switch 4 in downward, central protrusion 55 may be pushed back upward owing to resilience of switch 4.

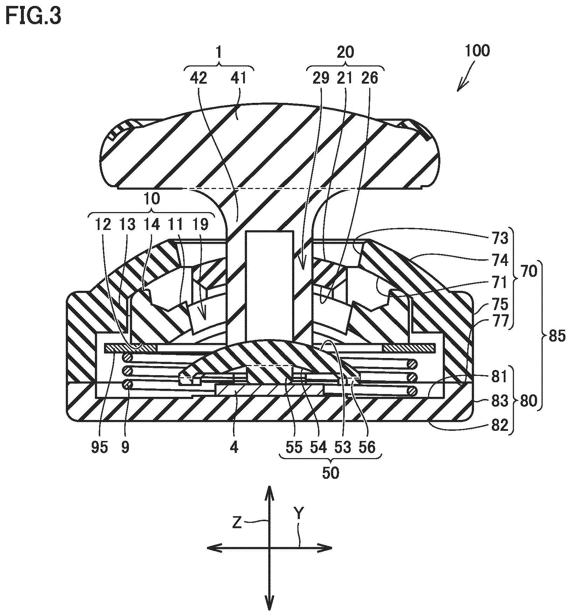

Fig. 3 is a second schematic cross-sectional view of direction input device 100 according to the first embodiment. The second schematic cross-sectional view is a view along second direction Y. As shown in Fig. 3, upper housing portion 70 includes a first slid surface 71. First slid surface 71 extends in first direction X. First slid surface 71 is in a shape curved convexly upward. In a cross-section in parallel to each of first direction X and upward-downward direction Z, first slid surface 71 may be, for example, in an arc shape or an elliptical arc shape. First slid surface 71 may be in a partially spherical shape. First slid surface 71 is a surface over which first slide portion 10 slides as abutting thereon from below. First slid surface 71 may be formed on a rear surface of upper module housing 70 or second lower surface 22 of second slide portion 20.

First projection 14 of first slide portion 10 abuts on first slid surface 71. First upper region 11 is distant from first slid surface 71. Third upper surface 74 is located opposite to first slid surface 71. First inner side surface 73 is contiguous to each of third upper surface 74 and first slid surface 71. First slide portion 10 does not have to include first projection 14. In this case, second upper region 15 (see Fig. 1) of first slide portion 10 abuts on first slid surface 71.

Slide biasing portion 9 is provided below first slide portion10 and second slide portion 20. Slide biasing portion 9 biases first slide portion 10 upward from below as pressing first slide portion 10 against first slid surface 71. First slide portion 10 returns to the initial position along first slid surface 71. Slide biasing portion 9 biases second slide portion 20 upward from below as pressing second slide portion 20 against second slid surface 72. Second slide portion 20 returns to the initial position along second slid surface 72. Therefore, input portion 1 can highly accurately return to the initial position. Slide biasing portion 9 may be divided into a first biasing portion (not shown) that biases first slide portion 10 and a second biasing portion (not shown) that biases second slide portion 20. For example, two springs may be prepared as the first biasing portion and two other springs may be prepared as the second biasing portion.

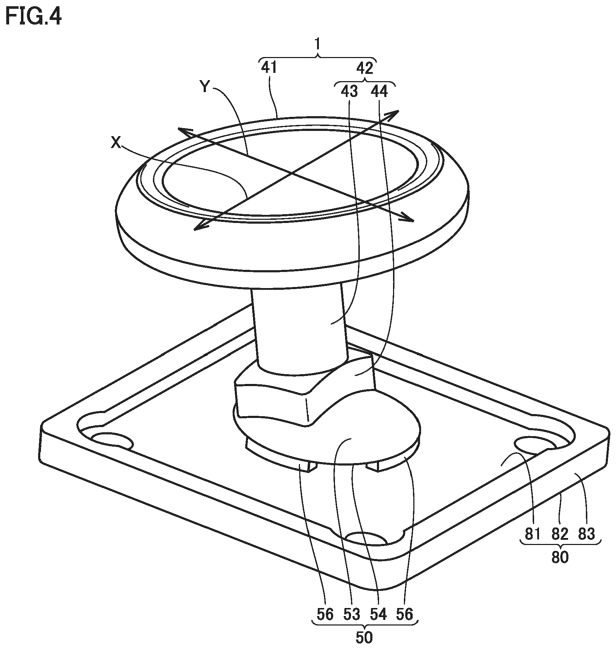

Fig. 4 is a second schematic perspective view showing the construction of direction input device 100 according to the first embodiment. Fig. 4 shows input portion 1, base 50, and lower housing portion 80 and does not show other members. As shown in Fig. 4, pullout prevention portion 44 is located between central portion 43 and base 50. In first direction X, pullout prevention portion 44 may be longer in length than central portion 43. In second direction Y, pullout prevention portion 44 is substantially the same in length as central portion 43. The length of pullout prevention portion 44 in first direction X may be longer than the length of pullout prevention portion 44 in second direction Y.

A method of attaching input portion 1 to second slide portion 20 and first slide portion 10 will now be described. Shaft 42 of input portion 1 may pass through each of first hole 19 and second hole 29. In this case, without division of input portion 1, input portion 1 can be attached to each of first slide portion 10 provided with first hole 19 and second slide portion 20 provided with second hole 29. Specifically, initially, shaft 42 of input portion 1 is inserted in second hole 29 (see Fig. 1) in second slide portion 20, and thereafter shaft 42 is turned by 90°. Pullout prevention portion 44 of input portion 1 can thus be prevented from coming off through second hole 29. Shaft 42 of input portion 1 is then inserted in first hole 19 (see Fig. 1) in first slide portion 10, and thereafter shaft 42 is further turned by 90°. Pullout prevention portion 44 of input portion 1 can thus be prevented from coming off through first hole 19. In this case, measures for prevention from coming off are taken only for first hole 19, whereas such measures are not taken for second hole 29. Such a manner may be applicable that measures for prevention from coming off are taken only for second hole 29, the measures are not taken for first hole 19, and pullout prevention portion 44 is located in first hole 19, which consequently prevents input portion 1 from coming off while input portion 1 similarly moves first slide portion 10 and second slide portion 20.

Operated portion 41, central portion 43, and pullout prevention portion 44 may be formed integrally or separately. In an example where operated portion 41, central portion 43, and pullout prevention portion 44 are integrally formed, the number of components can be smaller than in an example where they are formed as separate divided components.

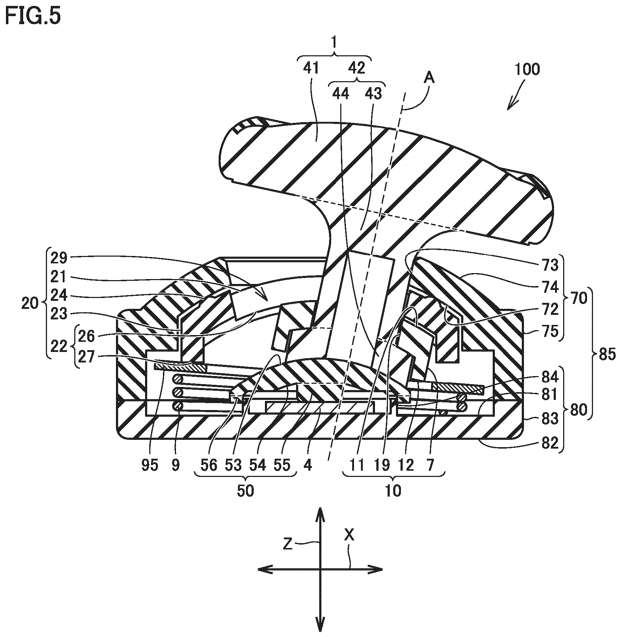

A motion of first slide portion 10 will now be described. Fig. 5 is a schematic cross-sectional view illustrating a motion of first slide portion 10. The schematic cross-sectional view shown in Fig. 5 is a view along first direction X. As shown in Fig. 5, when shaft 42 of input portion 1 is tilted in first direction X, first slide portion 10 moves with the motion of input portion 1. Specifically, first slide portion 10 slides in first direction X with tilting of input portion 1 from an initial position in first direction X. First projection 14 (see Fig. 3) of first slide portion 10 slides over first slid surface 71 while it abuts on first slid surface 71 of upper housing portion 70. The lower end of shaft 42 of input portion 1 slides over fifth upper surface 53 of base 50. At this time, second slide portion 20 does not substantially move.

As shown in Fig. 5, when the user tilts shaft 42 of input portion 1 to the right, first lower surface 12 of first slide portion 10 compresses slide biasing portion 9 downward with support plate 95 being interposed. At this time, a right end of support plate 95 moves downward. When shaft 42 of input portion 1 is tilted in first direction X, shaft 42 of input portion 1 can abut on first inner side surface 73 of upper housing portion 70. In other words, when shaft 42 of input portion 1 is tilted in first direction X, the motion of shaft 42 of input portion 1 is restricted by first inner side surface 73 of upper housing portion 70. When the user releases input portion 1, the right end of support plate 95 is pushed upward owing to resilience of slide biasing portion 9. As first slide portion 10 moves to a central position, shaft 42 of input portion 1 returns to the initial position (see Fig. 2).

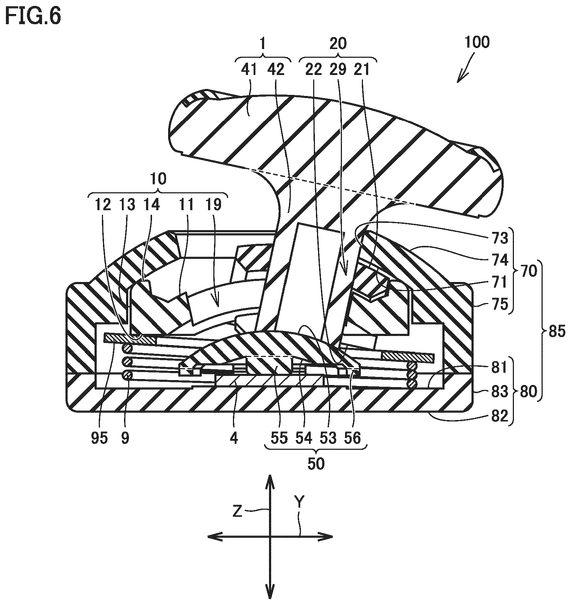

A motion of second slide portion 20 will now be described. Fig. 6 is a schematic cross-sectional view illustrating a motion of second slide portion 20. The schematic cross-sectional view shown in Fig. 6 is a view along second direction Y. As shown in Fig. 6, when shaft 42 of input portion 1 is tilted in second direction Y, second slide portion 20 moves with the motion of input portion 1. Specifically, second slide portion 20 slides in second direction Y with tilting of input portion 1 from the initial position in second direction Y. Second projection 24 (see Fig. 2) of second slide portion 20 slides over second slid surface 72 while it abuts on second slid surface 72 of upper housing portion 70. The lower end of shaft 42 of input portion 1 slides over fifth upper surface 53 of base 50. At this time, first slide portion 10 does not substantially move.

As shown in Fig. 6, when the user tilts shaft 42 of input portion 1 to the right, second lower surface 22 of second slide portion 20 compresses slide biasing portion 9 downward with support plate 95 being interposed. At this time, the right end of support plate 95 moves downward. When shaft 42 of input portion 1 is tilted in second direction Y, shaft 42 of input portion 1 can abut on first inner side surface 73 of upper housing portion 70. In other words, when shaft 42 of input portion 1 is tilted in second direction Y, the motion of shaft 42 of input portion 1 is restricted by first inner side surface 73 of upper housing portion 70. When the user releases input portion 1, the right end of support plate 95 is pushed upward owing to resilience of slide biasing portion 9. As second slide portion 20 moves to the central position, shaft 42 of input portion 1 returns to the initial position (see Fig. 3).

When viewed in the upward-downward direction, shaft 42 of input portion 1 can also be tilted in first direction X, in second direction Y, and in a direction inclined with respect to each of first direction X and second direction Y.

### (Second Embodiment)

An overview of a construction of direction input device 100 according to a second embodiment will now be described. Direction input device 100 according to the second embodiment is different from direction input device 100 according to the first embodiment mainly in including a first sensor 60, a first slider 91, and a second slider 92, whereas it is otherwise similar in construction to direction input device 100 according to the first embodiment. A construction different from direction input device 100 according to the first embodiment will mainly be described below.

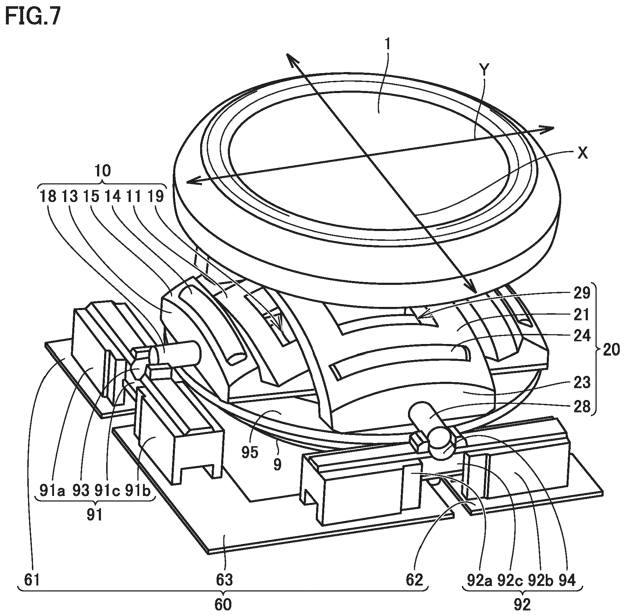

Fig. 7 is a schematic perspective view showing the construction of direction input device 100 according to the second embodiment. As shown in Fig. 7, direction input device 100 according to the second embodiment further includes first sensor 60, first slider 91, and second slider 92. Fig. 7 does not show module housing 85. As shown in Fig. 7, first sensor 60 includes a first contact 61, a second contact 62, and a third contact 63. When viewed in the upward-downward direction, third contact 63 may be, for example, in an L shape. Each of first contact 61 and second contact 62 is, for example, rectangular.

First slide portion 10 includes a first protrusion 18. First protrusion 18 is provided on first side surface 13. First protrusion 18 protrudes along second direction Y. Similarly, second slide portion 20 includes a second protrusion 28. Second protrusion 28 is provided on second side surface 23. Second protrusion 28 protrudes along first direction X.

As shown in Fig. 7, first slider 91 is provided with a first recess 93. First protrusion 18 is arranged in first recess 93. First slider 91 makes a linear motion with slide of first slide portion 10. First protrusion 18 moves first slider 91 with movement of first slide portion 10. Specifically, when first protrusion 18 moves with movement of first slide portion 10, first slider 91 is moved with the motion of first protrusion 18. First slider 91 moves in first direction X. When viewed in the upward-downward direction, a direction of movement of first slider 91 is the same as a direction of movement of first protrusion 18.

First slider 91 includes a first slide member 91a, a second slide member 91b, a first connection member 91c, and a not-shown electrically conducting member made of metal. First connection member 91c connects first slide member 91a and second slide member 91b to each other. The electrically conducting member has one end located in first slide member 91a. The electrically conducting member has the other end located in second slide member 91b. First slide member 91a is in contact, for example, with first contact 61. Second slide member 91b is in contact, for example, with third contact 63. An electrical resistance between first contact 61 and third contact 63 may vary when first slider 91 moves. First sensor 60 may thus detect the electrical resistance that varies with motion of first slider 91.

As shown in Fig. 7, second slider 92 is provided with a second recess 94. Second protrusion 28 is arranged in second recess 94. Second slider 92 makes a linear motion with slide of second slide portion 20. Second protrusion 28 moves second slider 92 with movement of second slide portion 20. Specifically, when second protrusion 28 moves with movement of second slide portion 20, second slider 92 is moved with the motion of second protrusion 28. Second slider 92 moves in second direction Y. When viewed in the upward-downward direction, a direction of movement of second slider 92 is the same as a direction of movement of second protrusion 28.

Second slider 92 includes a third slide member 92a, a fourth slide member 92b, a second connection member 92c, and a not-shown electrically conducting member made of metal. Second connection member 92c connects third slide member 92a and fourth slide member 92b to each other. The electrically conducting member has one end located in third slide member 92a. The electrically conducting member has the other end located in fourth slide member 92b. Third slide member 92a is in contact, for example, with third contact 63. Fourth slide member 92b is in contact, for example, with second contact 62. An electrical resistance between third contact 63 and second contact 62 may vary when second slider 92 moves. First sensor 60 may thus detect the electrical resistance that varies with motion of second slider 92.

According to direction input device 100 according to the second embodiment, first slide portion 10 and second slide portion 20 can also serve as a detection mechanism. Therefore, the space or the number of components can be smaller than in an example where direction input device 100 includes the detection mechanism as a separate component.

### (Third Embodiment)

An overview of a construction of direction input device 100 according to a third embodiment will now be described. Direction input device 100 according to the third embodiment is different from direction input device 100 according to the first embodiment mainly in including a second sensor 68, whereas it is otherwise similar in construction to direction input device 100 according to the first embodiment. A construction different from direction input device 100 according to the first embodiment will mainly be described below.

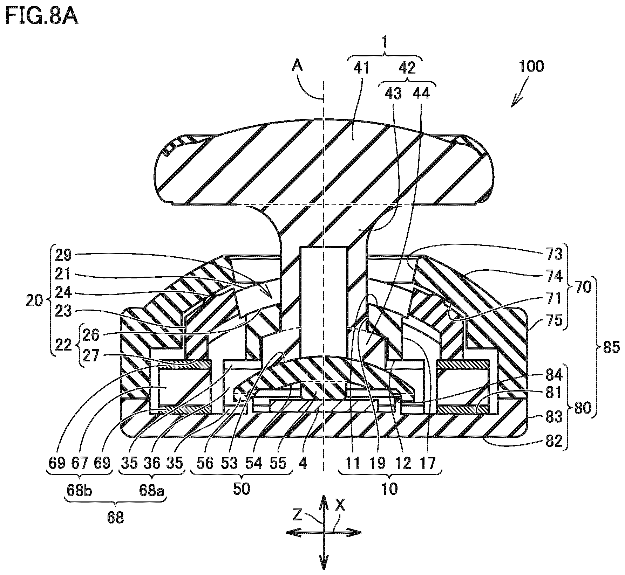

Fig. 8A is a schematic cross-sectional view showing the construction of direction input device 100 according to the third embodiment. The schematic cross-sectional view shown in Fig. 8A is a view along first direction X. As shown in Fig. 8A, direction input device 100 according to the third embodiment further includes second sensor 68. Second sensor 68 is, for example, a capacitance sensor. Second sensor 68 includes a first slide portion sensor 68a and a second slide portion sensor 68b. First slide portion sensor 68a includes a pair of first electrodes 35 and a first elastic body 36. Second slide portion sensor 68b includes a pair of second electrodes 69 and a second elastic body 67. The pair of first electrodes 35 is provided on opposing sides of first elastic body 36 in a direction of thickness of first elastic body 36. The pair of second electrodes 69 is provided on opposing sides of second elastic body 67 in a direction of thickness of second elastic body 67. First elastic body 36 and second elastic body 67 may each be a non-conductor. In direction input device 100 according to the third embodiment, first elastic body 36 and second elastic body 67 are provided instead of slide biasing portion 9.

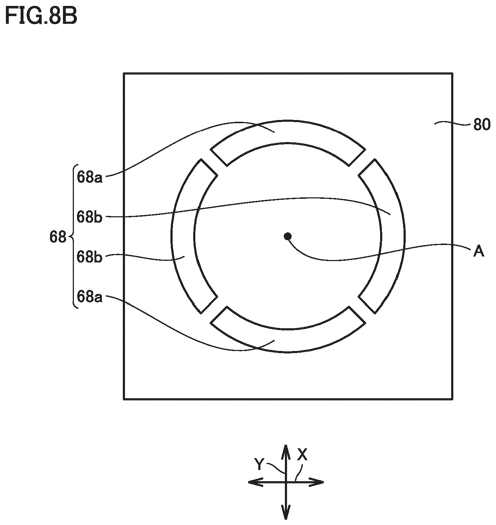

Fig. 8B is a schematic plan view showing a construction of second sensor 68 of direction input device 100 according to the third embodiment. As shown in Fig. 8B, when viewed in upward-downward direction Z, first slide portion sensor 68a and second slide portion sensor 68b are each in a shape in conformity with an arc. Second slide portion sensor 68b is arranged at a position resulting from rotation of first slide portion sensor 68a by 90° along a virtual circle around axial line A. Specifically, one of two first slide portion sensors 68a is provided at a position at 0° and the other thereof is provided at a position at 180°. One of two second slide portion sensors 68b is provided at a position at 90° and the other thereof is provided at a position at 270°.

As shown in Fig. 8A, first elastic body 36 is located between the pair of first electrodes 35. One of the pair of first electrodes 35 is located on lower housing portion 80. First slide portion 10 is located on the other of the pair of first electrodes 35. First elastic body 36 varies in thickness with slide of first slide portion 10. The capacitance between the pair of first electrodes 35 is thus varied. A parameter corresponding to an angle of tilt of input portion 1 may be calculated based on the capacitance between the pair of first electrodes 35 or variation thereof. A parameter corresponding to a load applied to first slide portion 10 may be calculated in addition to or instead of the angle of tilt of input portion 1.

Second elastic body 67 is located between the pair of second electrodes 69. One of the pair of second electrodes 69 is located on lower housing portion 80. Second slide portion 20 is located on the other of the pair of second electrodes 69. Second elastic body 67 varies in thickness with slide of second slide portion 20. The capacitance between the pair of second electrodes 69 is thus varied. A parameter corresponding to an angle of tilt of input portion 1 may be calculated based on the capacitance between the pair of second electrodes 69 or variation thereof. A parameter corresponding to a load applied to second slide portion 20 may be calculated in addition to or instead of the angle of tilt of input portion 1.

A controller or a processor (not shown) on a side of a game device may carry out certain control linearly or stepwise in accordance with a detected capacitance or variation thereof. The controller or the processor on the side of the game device may carry out certain control in response to the detected capacitance or variation thereof exceeding a certain threshold value. Though an example in which second sensor 68 is the capacitance sensor is described above, second sensor 68 is not limited to the capacitance sensor. Second sensor 68 may be, for example, a strain gauge, a magnetic sensor, or a pressure sensor.

### (Fourth Embodiment)

An overview of a construction of direction input device 100 according to a fourth embodiment will now be described. Direction input device 100 according to the fourth embodiment is different from direction input device 100 according to the first embodiment mainly in including a rib 86 and a base biasing portion 87, whereas it is otherwise similar in construction to direction input device 100 according to the first embodiment. A construction different from direction input device 100 according to the first embodiment will mainly be described below.

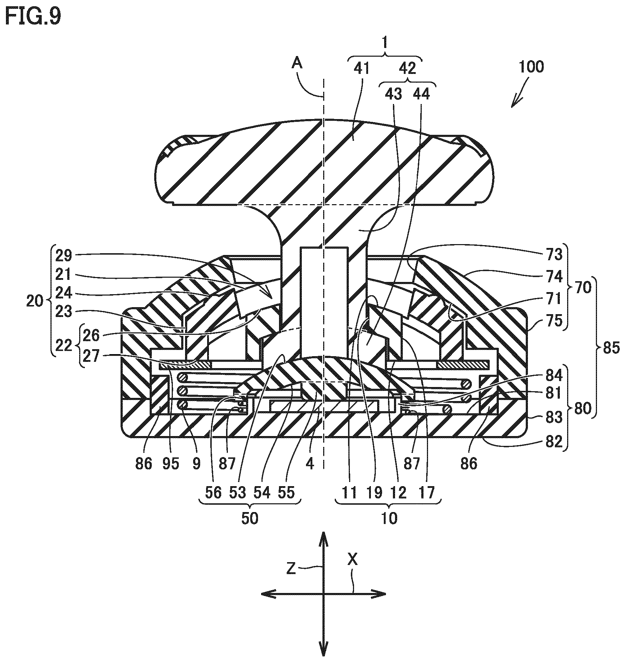

Fig. 9 is a schematic cross-sectional view showing the construction of direction input device 100 according to the fourth embodiment. A schematic cross-sectional view shown in Fig. 9 is a view along first direction X. As shown in Fig. 9, direction input device 100 according to the fourth embodiment further includes rib 86. Rib 86 is arranged on the outside of slide biasing portion 9. Rib 86 is provided in the inside of module housing 85. Rib 86 is provided on lower housing portion 80. Rib 86 may be in contact with upper housing portion 70. Rib 86 has an upper end opposed to support plate 95. When support plate 95 is tilted as a result of tilting of input portion 1, support plate 95 may come in contact with the upper end of rib 86. From a different point of view, tilting of support plate 95 may be restricted by rib 86.

As shown in Fig. 9, direction input device 100 according to the fourth embodiment may include base biasing portion 87. Base biasing portion 87 may be provided between outer protrusion 56 of base 50 and fourth upper surface 81 of lower housing portion 80. Base biasing portion 87 is, for example, a coil spring. Base biasing portion 87 biases base 50 upward. When central protrusion 55 of base 50 presses switch 4 as input portion 1 is pressed in downward, base biasing portion 87 may push base 50 back upward in addition to or instead of switch 4. Direction input device 100 according to the fourth embodiment may include only one of rib 86 and base biasing portion 87, and does not have to include the other of rib 86 and base biasing portion 87.

### (Fifth Embodiment)

An overview of a construction of direction input device 100 according to a fifth embodiment will now be described. Direction input device 100 according to the fifth embodiment is different from direction input device 100 according to the first embodiment mainly in that slide biasing portion 9 is a conical coil spring, whereas it is otherwise similar in construction to direction input device 100 according to the first embodiment. A construction different from direction input device 100 according to the first embodiment will mainly be described below.

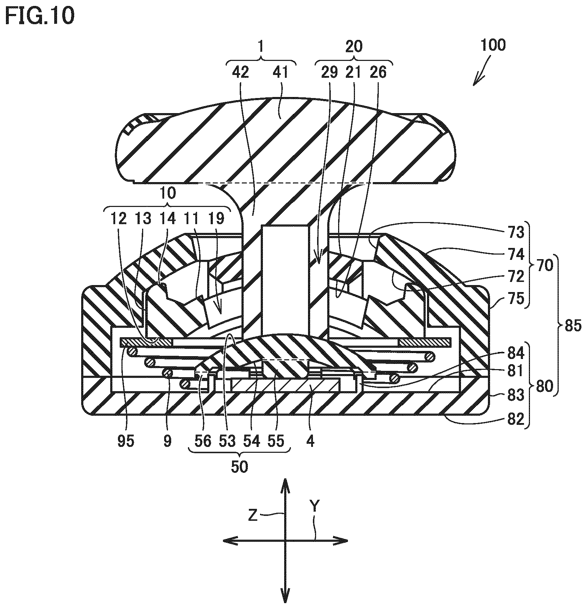

Fig. 10 is a schematic cross-sectional view showing the construction of direction input device 100 according to the fifth embodiment. The schematic cross-sectional view shown in Fig. 10 is a view along second direction Y. As shown in Fig. 10, slide biasing portion 9 of direction input device 100 according to the fifth embodiment may be a conical coil spring. The conical coil spring may increase in diameter upward from below. A lower end of the conical coil spring may surround switch 4. An upper end of the conical coil spring may surround fifth upper surface 53 of base 50.

### (Sixth Embodiment)

An overview of a construction of direction input device 100 according to a sixth embodiment will now be described. Direction input device 100 according to the sixth embodiment is different from direction input device 100 according to the fifth embodiment mainly in that a width of a lower surface of each of first slide portion 10 and second slide portion 20 decreases downward from above, whereas it is otherwise similar in construction to direction input device 100 according to the fifth embodiment. A construction different from direction input device 100 according to the fifth embodiment will mainly be described below.

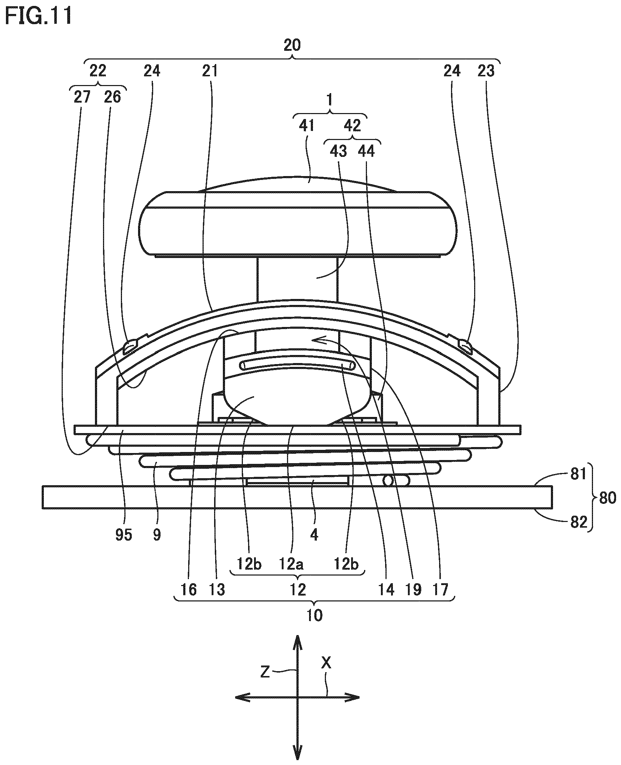

Fig. 11 is a schematic side view showing the construction of direction input device 100 according to the sixth embodiment. The schematic side view shown in Fig. 11 is a view in second direction Y. As shown in Fig. 11, when viewed in second direction Y, the width of the lower surface (first lower surface 12) of first slide portion 10 in first direction X may decrease downward from above. First lower surface 12 includes a first lower end region 12a and a second lower end region 12b. Second lower region 12b is contiguous to first lower end region 12a. First lower end region 12a is in contact with support plate 95. Second lower end region 12b is distant from support plate 95. As shown in Fig. 11, when viewed in second direction Y, second lower end region 12b is inclined upward with respect to first lower end region 12a. Second lower end region 12b may be contiguous to third side surface 17. In direction input device 100 according to the sixth embodiment, only first slide portion 10 may be in a lower-surface structure as above, or only second slide portion 20 may be in the lower-surface structure as above.

### (Seventh Embodiment)

An overview of a construction of direction input device 100 according to a seventh embodiment will now be described. Direction input device 100 according to the seventh embodiment is different from direction input device 100 according to the fifth embodiment mainly in that each of first slide portion 10 and second slide portion 20 includes a first projecting portion 6, whereas it is otherwise similar in construction to direction input device 100 according to the fifth embodiment. A construction different from direction input device 100 according to the fifth embodiment will mainly be described below.

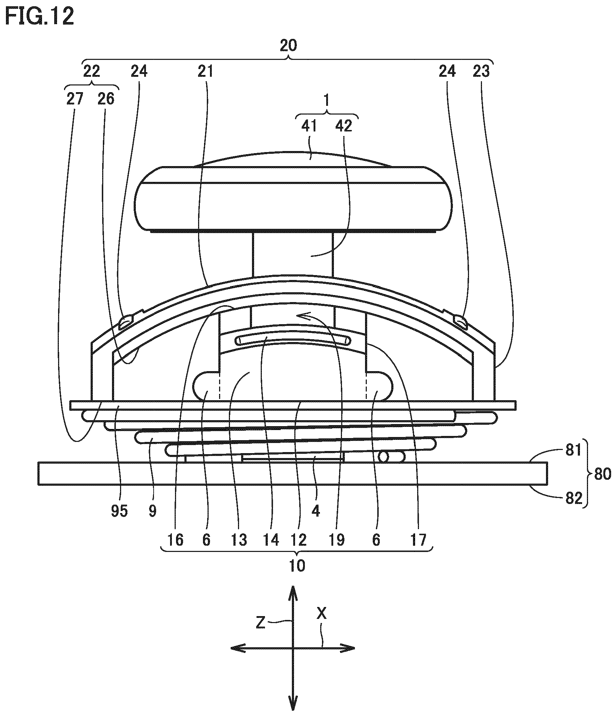

Fig. 12 is a schematic side view showing the construction of direction input device 100 according to the seventh embodiment. The schematic side view shown in Fig. 12 is a view in second direction Y. As shown in Fig. 12, first slide portion 10 may include first projecting portion 6. First projecting portion 6 projects in first direction X from third side surface 17. First projecting portion 6 forms a part of first lower surface 12. First projecting portion 6 is in contact with support plate 95. First projecting portion 6 may be in a shape curved convexly outward. First projecting portion 6 is distant from first upper surface 16. First projecting portion 6 is contiguous to first side surface 13. In the presence of first projecting portion 6, even when the angle of tilt is the same, an amount of pressing down of support plate 95 is larger and hence recovery force is relatively greater than in the absence of first projecting portion 6. In direction input device 100 according to the seventh embodiment, only first slide portion 10 or only second slide portion 20 may include first projecting portion 6.

### (Eighth Embodiment)

An overview of a construction of direction input device 100 according to an eighth embodiment will now be described. Direction input device 100 according to the eighth embodiment is different from direction input device 100 according to the seventh embodiment mainly in that an outer region 12e of the lower surface of each of first slide portion 10 and second slide portion 20 is located above a central region 12c, whereas it is otherwise similar in construction to direction input device 100 according to the seventh embodiment. A construction different from direction input device 100 according to the seventh embodiment will mainly be described below.

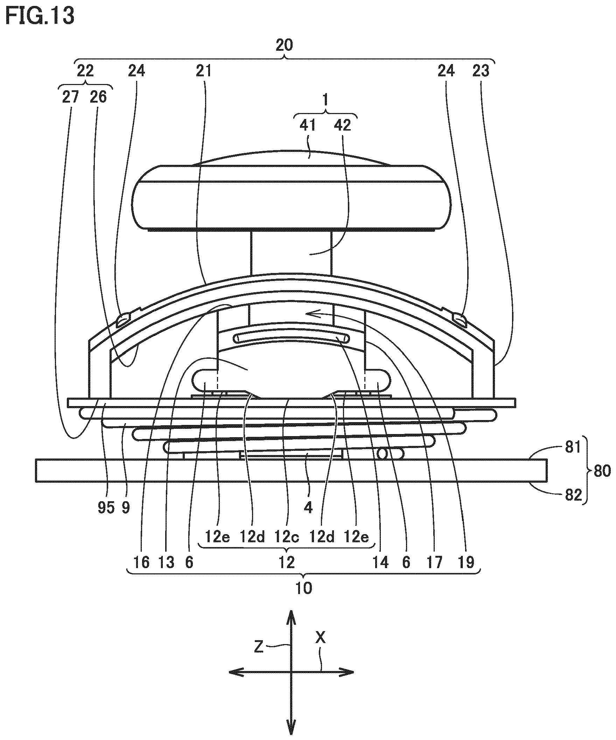

Fig. 13 is a schematic side view showing the construction of direction input device 100 according to the eighth embodiment. The schematic side view shown in Fig. 13 is a view in second direction Y. As shown in Fig. 13, first lower surface 12 of first slide portion 10 includes central region 12c, a connection region 12d, and outer region 12e. In first direction X, outer region 12e is provided on the outside of central region 12c. Outer region 12e is provided above central region 12c. Connection region 12d is located between central region 12c and outer region 12e. Connection region 12d connects central region 12c and outer region 12e to each other. Connection region 12d is inclined upward with respect to central region 12c. Outer region 12e is inclined downward with respect to connection region 12d at a boundary between outer region 12e and connection region 12d. Outer region 12e forms a part of the lower surface of first projecting portion 6. First projecting portion 6 is distant from support plate 95.

As shown in Fig. 13, in first direction X, central region 12c may be smaller in width than first projection 14. Central region 12c is in contact with support plate 95 at least when input portion 1 is located at the initial position. Outer region 12e and connection region 12d are distant from support plate 95. When viewed in second direction Y, connection region 12d is inclined with respect to each of central region 12c and outer region 12e. A width of connection region 12d in first direction X increases upward. In direction input device 100 according to the eighth embodiment, only first slide portion 10 or only second slide portion 20 may be in the structure as above.

Recovery force of first slide portion 10 of direction input device 100 according to the eighth embodiment will now be described.

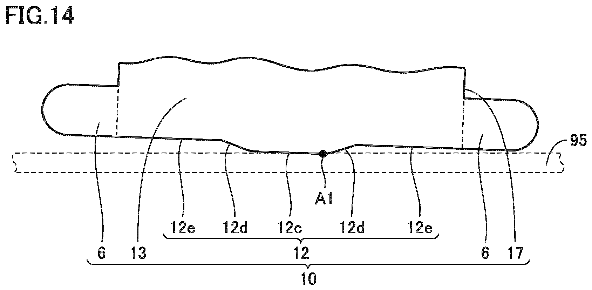

Fig. 14 is a schematic side view showing a state in which first slide portion 10 of direction input device 100 according to the eighth embodiment is tilted by a first angle (for example, 2°). As shown in Fig. 14, a point of contact between first lower surface 12 of first slide portion 10 and support plate 95 is located at a first position A1. First position A1 is located in central region 12c. When the angle of tilt is 2°, interference between first slide portion 10 and support plate 95 caused by tilting of first slide portion 10 is minor. Therefore, recovery force of first slide portion 10 is small.

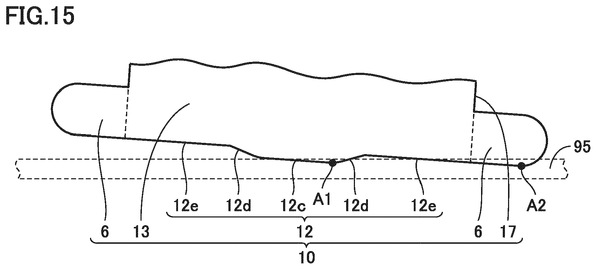

Fig. 15 is a schematic side view showing a state in which first slide portion 10 of direction input device 100 according to the eighth embodiment is tilted by a second angle (for example, 4°) larger than the first angle. Recovery force of first slide portion 10 in an example where the angle of tilt is 4° is greater than recovery force of first slide portion 10 in the example where the angle of tilt is 2°. As shown in Fig. 15, a point of contact between first lower surface 12 of first slide portion 10 and support plate 95 is located at first position A1 and a second position A2. Second position A2 is located in outer region 12e.

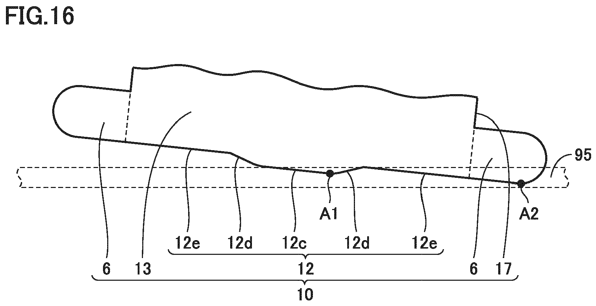

Fig. 16 is a schematic side view showing a state in which first slide portion 10 of direction input device 100 according to the eighth embodiment is tilted by a third angle (for example, 6°) larger than the second angle. Vertical displacement of support plate 95 at second position A2 at the time when input portion 1 is tilted from the initial position is greater than vertical displacement of support plate 95 at first position A1. Therefore, after first lower surface 12 of first slide portion 10 and support plate 95 come in contact with each other at first position A1 and second position A2, an amount of change in vertical displacement per angle of tilt becomes greater and an increment (inclination) of recovery force per angle of tilt becomes greater.

In other words, while first slide portion 10 is tilted from an initial angle (for example, 0°) to a prescribed angle (for example, 4°), a contact located outermost (for example, first position A1) in a region where first slide portion 10 and support plate 95 are in contact with each other remains at the same position or continuously moves. When first slide portion 10 is tilted beyond the prescribed angle (for example, 4°), the contact located outermost discontinuously moves from first position A1 to second position A2. Therefore, direction input device 100 according to the eighth embodiment can control change of perception about input portion 1 by switching the increment (inclination) of recovery force per angle of tilt in two levels.

### [B. Controller]

A construction of a controller 110 according to the present disclosure will now be described. Controller 110 according to the present disclosure mainly includes direction input device 100 and a controller housing 3. Direction input device 100 is provided in controller housing 3.

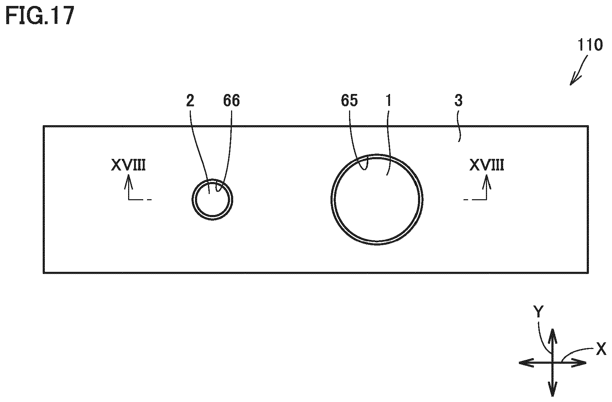

Fig. 17 is a schematic plan view showing the construction of controller 110 according to the present disclosure. As shown in Fig. 17, controller housing 3 is, for example, substantially in a shape of a parallelepiped. Controller housing 3 is provided with a first through hole 65. Input portion 1 is arranged in first through hole 65. A part of input portion 1 is located on the outside of controller housing 3.

Controller housing 3 is provided with a second through hole 66. A button 2 is arranged in second through hole 66. A part of button 2 is located on the outside of controller housing 3. The button is to be operated by the user. Controller housing 3 extends, for example, along first direction X. First direction X is, for example, a longitudinal direction of controller housing 3. Second direction Y is, for example, a direction of a short side of controller housing 3. In a plan view, input portion 1 and button 2 may be aligned along first direction X.

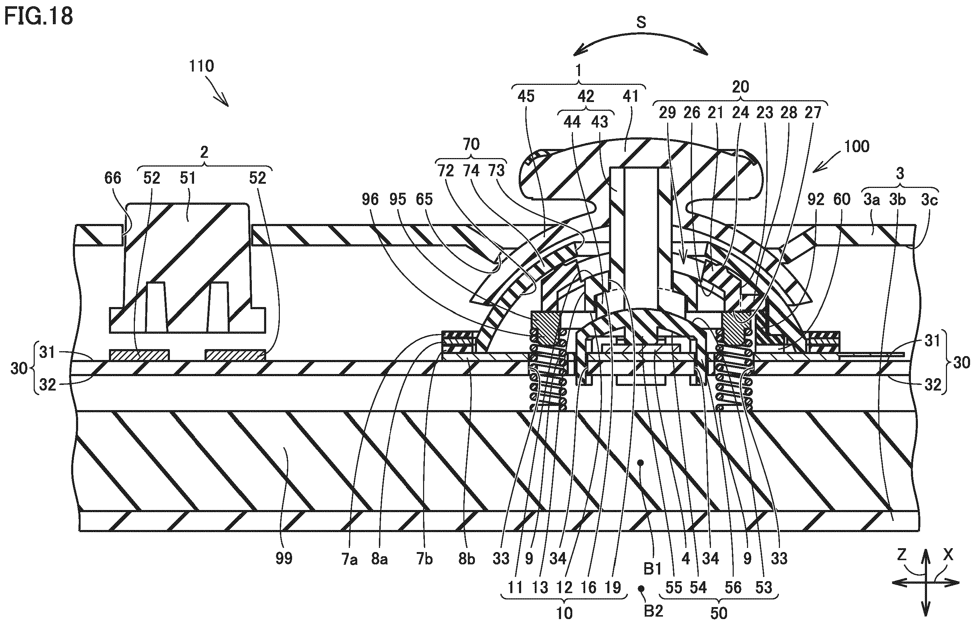

Fig. 18 is a schematic cross-sectional view along the line XVIII-XVIII in Fig. 17. The cross-section shown in Fig. 18 is in parallel to first direction X. As shown in Fig. 18, controller 110 includes a substrate 30 and a support member 99. Substrate 30 and support member 99 are arranged in the inside of controller housing 3. Substrate 30 includes a front surface 31 and a rear surface 32. Rear surface 32 is located opposite to front surface 31. Controller housing 3 is constituted of a front-surface-side housing portion 3a and a rear-surface-side housing portion 3b. Front-surface-side housing portion 3a is combined with rear-surface-side housing portion 3b. Substrate 30 is located between front-surface-side housing portion 3a and support member 99. Front-surface-side housing portion 3a includes a rear surface 3c opposed to substrate 30. Support member 99 is located between substrate 30 and rear-surface-side housing portion 3b.

Input portion 1 may include a skirt 45. Skirt 45 is contiguous, for example, to shaft 42. Skirt 45 is arranged to surround shaft 42. Skirt 45 is tilted with tilting of shaft 42. A part of skirt 45 is arranged in first through hole 65. Skirt 45 is arranged below operated portion 41. Skirt 45 may increase in inner diameter as a distance from operated portion 41 is longer. From a different point of view, skirt 45 may increase in inner diameter from operated portion 41 toward substrate 30.

Controller 110 may include, for example, a reinforcement plate 7a, a first electrode layer 8a, a cushion material 7b, and a second electrode layer 8b. Second electrode layer 8b is provided on substrate 30. Cushion material 7b is provided on second electrode layer 8b. First electrode layer 8a is provided on cushion material 7b. Cushion material 7b lies between first electrode layer 8a and second electrode layer 8b. Reinforcement plate 7a is provided on first electrode layer 8a.

Skirt 45 is arranged above reinforcement plate 7a. When the user tilts input portion 1, skirt 45 is inclined to come in contact with reinforcement plate 7a. When skirt 45 comes in contact with reinforcement plate 7a, a load is applied to reinforcement plate 7a. When the load is applied to reinforcement plate 7a, cushion material 7b is compressed and a capacitance between first electrode layer 8a and second electrode layer 8b varies. When unloaded, a thickness of cushion material 7b returns to a thickness before application of the load.

A range of tilting of input portion 1 may be restricted by skirt 45. Variation in capacitance may be detected in addition to or instead of detection of an angle of tilt by a slider. When variation in capacitance is detected in addition to detection of the angle of tilt by the slider or the like, contents of control carried out for amounts of detection of them may be different.

Input portion 1 of direction input device 100 according to any one of the first to eighth embodiments may include skirt 45. A mechanism that detects variation in capacitance described above may be incorporated in direction input device 100.

As shown in Fig. 18, button 2 includes, for example, a pressed member 51 and a fourth contact 52. Pressed member 51 is a member to be pressed by the user. Pressed member 51 is arranged in second through hole 66. Fourth contact 52 is provided on front surface 31 of substrate 30. Fourth contact 52 is opposed to a bottom surface of pressed member 51. When the user presses pressed member 51 toward front surface 31 of substrate 30, pressed member 51 comes in contact with fourth contact 52. Controller 110 thus detects input from the user. When the user releases pressed member 51, pressed member 51 moves away from fourth contact 52 owing to a not-shown pushing-back mechanism.

Slide biasing portion 9 may include a plurality of coil springs. The number of coil springs is not particularly limited, and for example, four coil springs are provided. Slide biasing portion 9 may pass through substrate 30. Substrate 30 is provided with a third through hole 33. Slide biasing portion 9 is arranged in third through hole 33. Slide biasing portion 9 has a lower end in contact with support member 99. Slide biasing portion 9 has an upper end in contact with support plate 95. Slide biasing portion 9 has the upper end attached to an attachment projecting portion 96 of support plate 95. Outer protrusion 56 of base 50 may pass through substrate 30. Substrate 30 is provided with a fourth through hole 34. Outer protrusion 56 is arranged in fourth through hole 34.

Input portion 1 can be tilted along a direction of tilt S. Second slid surface 72 may be in a partially spherical shape formed such that input portion 1 is tilted with respect to a virtual center. The virtual center may be located on the outside of direction input device 100 and in the inside of controller housing 3. Specifically, the virtual center is located at a first center B1 located under substrate 30. The virtual center may be located at first center B1 located between substrate 30 and rear-surface-side housing portion 3b. The virtual center may be located at first center B1 in support member 99. Likewise second slid surface 72, first slid surface 71 may be in a partially spherical shape formed such that input portion 1 is tilted with respect to the virtual center.

The virtual center may be located on the outside of controller housing 3. Specifically, the virtual center may be located at a second center B2 located under rear-surface-side housing portion 3b. Substrate 30 may be located between second center B2 and input portion 1. Rear-surface-side housing portion 3b may be located between second center B2 and support member 99.

As described above, each of first slid surface 71 and second slid surface 72 should only be in a shape curved convexly upward and the shape thereof is not limited to the partially spherical shape. When each of first slid surface 71 and second slid surface 72 is in a shape other than the partially spherical shape, the motion of input portion 1 is not a circular motion. In this case, input portion 1 does not have to have the virtual center. Each of first slid surface 71 and second slid surface 72 may be formed on rear surface 3c of controller housing 3. Alternatively, second slid surface 72 may be formed on rear surface 3c of controller housing 3 and first slid surface 71 may be formed in first lower region 26 of second slide portion 20.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 input portion; 2 button; 3 controller housing; 3a front-surface-side housing portion; 3b rear-surface-side housing portion; 3c rear surface; 4 switch; 6 first projecting portion; 7a reinforcement plate; 7b cushion material; 8a first electrode layer; 8b second electrode layer; 9 slide biasing portion; 10 first slide portion; 11 first upper region; 12 first lower surface (lower surface); 12a first lower end region; 12b second lower end region; 12c central region; 12d connection region; 12e outer region; 13 first side surface; 14 first projection; 15 second upper region; 16 first upper surface (upper surface); 17 third side surface (side surface); 18 first protrusion; 19 first hole; 20 second slide portion; 21 second upper surface; 22 second lower surface (lower surface); 23 second side surface; 24 second projection; 26 first lower region; 27 second lower region; 28 second protrusion; 29 second hole; 30 substrate; 31 front surface; 32 rear surface; 33 third through hole; 34 fourth through hole; 35 first electrode; 36 first elastic body; 41 operated portion; 42 shaft; 43 central portion; 44 pullout prevention portion; 45 skirt; 50 base; 51 pressed member; 52 fourth contact; 53 fifth upper surface; 54 fifth lower surface; 55 central protrusion; 56 outer protrusion; 60 first sensor (sensor); 61 first contact; 62 second contact; 63 third contact; 65 first through hole; 66 second through hole; 67 second elastic body; 68 second sensor; 68a first slide portion sensor; 68b second slide portion sensor; 69 second electrode; 70 upper housing portion; 71 first slid surface; 72 second slid surface; 73 first inner side surface; 74 third upper surface; 75 first outer side surface; 76 shaft through hole; 77 third lower surface; 80 lower housing portion; 81 fourth upper surface; 82 fourth lower surface; 83 second outer side surface; 84 attachment portion; 85 module housing; 86 rib; 87 base biasing portion; 91 first slider; 91a first slide member; 91b second slide member; 91c first connection member; 92 second slider; 92a third slide member; 92b fourth slide member; 92c second connection member; 93 first recess; 94 second recess; 95 support plate; 96 attachment projecting portion; 99 support member; 100 direction input device; 110 controller; A axial line; A1 first position; A2 second position; B1 first center; B2 second center; S direction of tilt; X first direction; Y second direction; Z upward-downward direction

## Claims

1. A direction input device (100) comprising:
an input portion (1) including an operated portion (41) and a shaft (42) that extends downward from the operated portion;
a first slide portion (10) that slides in a first direction in response to the input portion tilting from an initial position in the first direction, the first slide portion being provided with a first hole (19) through which the shaft passes, the first hole extending in a second direction perpendicular to the first direction;
a second slide portion (20) that slides in the second direction in response to the input portion tilting from the initial position in the second direction, the second slide portion being provided with a second hole (29) through which the shaft passes, the second hole extending in the first direction;
a first slid surface (71) that extends in the first direction, the first slid surface being in a shape curved convexly upward, the first slide portion sliding over the first slid surface as the first slide portion abutting on the first slid surface from below;
a second slid surface (72) that extends in the second direction, the second slid surface being in a shape curved convexly upward, the second slide portion sliding over the second slid surface as the second slide portion abutting on the second slid surface from below; and
a slide biasing portion (9) provided below the first slide portion and the second slide portion, the slide biasing portion biasing the first slide portion upward from below as pressing the first slide portion against the first slid surface and biasing the second slide portion upward from below as pressing the second slide portion against the second slid surface.

2. The direction input device according to claim 1, wherein
the slide biasing portion is a spring having an axial line identical to an axial line of the shaft as a central axis.

3. The direction input device according to claim 2, wherein
the spring is a conical coil spring.

4. The direction input device according to claim 3, wherein
the conical coil spring increases in diameter upward from below.

5. The direction input device according to any one of claims 1 to 4, further comprising a base (50) over which a lower end of the shaft slides, the base being provided in a space surrounded by the slide biasing portion.

6. The direction input device according to claim 5, further comprising a switch (4) provided below the base, the switch receiving input by pressing in of the input portion downward.

7. The direction input device according to claim 5 or 6, further comprising a base biasing portion (87) that biases the base upward.

8. The direction input device according to any one of claims 1 to 7, wherein
when viewed in the second direction, a width of a lower surface of the first slide portion in the first direction decreases downward from above.

9. The direction input device according to any one of claims 1 to 7, wherein
the first slide portion includes a projecting portion (6) that projects in the first direction from a side surface of the first slide portion, the projecting portion forming a part of a lower surface of the first slide portion.

10. The direction input device according to any one of claims 1 to 7, wherein
when viewed in the second direction, a lower surface (12) of the first slide portion is composed of a central region (12c), an outer region (12e) provided above the central region and on an outer side of the central region, and a connection region (12d) located between the central region and the outer region,
the connection region is inclined upward with respect to the central region, and
the outer region is inclined downward with respect to the connection region at a boundary between the outer region and the connection region.

11. The direction input device according to any one of claims 1 to 7, further comprising a support plate (95) in contact with the first slide portion, wherein
while the first slide portion is tilted from an initial angle to a prescribed angle, a contact located outermost in a region where the first slide portion and the support plate are in contact with each other remains at an identical position or continuously moves, and
when the first slide portion is tilted beyond the prescribed angle, the contact discontinuously moves outward.

12. A controller (110) comprising:
the direction input device according to any one of claims 1 to 11; and
a controller housing (3) in which the direction input device is provided, wherein
the second slid surface is in a partially spherical shape formed such that the input portion is tilted with respect to a virtual center, and
the virtual center is located on outside of the controller housing.

13. A controller (110) comprising:
the direction input device according to any one of claims 1 to 11; and
a controller housing (3) in which the direction input device is provided, wherein
the second slid surface is in a partially spherical shape formed such that the input portion is tilted with respect to a virtual center, and
the virtual center is located on outside of the direction input device and in inside of the controller housing.

14. The controller according to claim 12 or 13, wherein
each of the first slid surface and the second slid surface is formed on a rear surface of the controller housing.

15. The controller according to claim 12 or 13, wherein
the second slid surface is formed on a rear surface of the controller housing and the first slid surface is formed on a lower surface of the second slide portion.

## Patentansprüche

1. Richtungseingabevorrichtung (100), umfassend:
einen Eingabeabschnitt (1), der einen Betätigungsabschnitt (41) und einen Schaft (42) beinhaltet, der sich von dem Betätigungsabschnitt nach unten erstreckt;
einen ersten Gleitabschnitt (10), der in einer ersten Richtung als Reaktion darauf gleitet, dass der Eingabeabschnitt aus einer Ausgangsposition in der ersten Richtung gekippt wird, wobei der erste Gleitabschnitt mit einem ersten Loch (19) bereitgestellt ist, durch das der Schaft verläuft, wobei sich das erste Loch in einer zweiten Richtung senkrecht zu der ersten Richtung erstreckt;
einen zweiten Gleitabschnitt (20), der in der zweiten Richtung als Reaktion darauf gleitet, dass der Eingabeabschnitt aus der Ausgangsposition in die zweite Richtung gekippt wird, wobei der zweite Gleitabschnitt mit einem zweiten Loch (29) bereitgestellt ist, durch das der Schaft verläuft, wobei sich das zweite Loch in der ersten Richtung erstreckt;
eine erste Gleitfläche (71), die sich in der ersten Richtung erstreckt, wobei die erste Gleitfläche eine konvex nach oben gekrümmte Form ist, wobei der erste Gleitabschnitt über die erste Gleitfläche gleitet, während der erste Gleitabschnitt von unten an der ersten Gleitfläche anliegt;
eine zweite Gleitfläche (72), die sich in der zweiten Richtung erstreckt, wobei die zweite Gleitfläche eine konvex nach oben gekrümmte Form ist, wobei der zweite Gleitabschnitt über die zweite Gleitfläche gleitet, während der zweite Gleitabschnitt von unten an der zweiten Gleitfläche anliegt; und
einen Gleitvorspannabschnitt (9), der unter dem ersten Gleitabschnitt und dem zweiten Gleitabschnitt bereitgestellt ist, wobei der Gleitvorspannabschnitt den ersten Gleitabschnitt von unten nach oben vorspannt, um den ersten Gleitabschnitt gegen die erste Gleitfläche zu drücken, und den zweiten Gleitabschnitt von unten nach oben vorspannt, um den zweiten Gleitabschnitt gegen die zweite Gleitfläche zu drücken.

2. Richtungseingabevorrichtung nach Anspruch 1, wobei
der Gleitvorspannabschnitt eine Feder ist, die eine Axiallinie aufweist, die der Axiallinie des Schafts als eine Mittelachse identisch ist.

3. Richtungseingabevorrichtung nach Anspruch 2, wobei
die Feder eine konische Schraubenfeder ist.

4. Richtungseingabevorrichtung nach Anspruch 3, wobei
die konische Schraubenfeder von unten nach oben im Durchmesser zunimmt.

5. Richtungseingabevorrichtung nach einem der Ansprüche 1 bis 4, ferner umfassend eine Basis (50), über die ein unteres Ende des Schafts gleitet, wobei die Basis in einem Raum bereitgestellt ist, der von dem Gleitvorspannabschnitt umgeben ist.

6. Richtungseingabevorrichtung nach Anspruch 5, ferner umfassend einen Schalter (4), der unter der Basis bereitgestellt ist, wobei der Schalter eine Eingabe durch Drücken des Eingabeabschnitts nach unten empfängt.

7. Richtungseingabevorrichtung nach Anspruch 5 oder 6, ferner umfassend einen Basisvorspannabschnitt (87), der die Basis nach oben vorspannt.

8. Richtungseingabevorrichtung nach einem der Ansprüche 1 bis 7, wobei
bei Betrachtung in der zweiten Richtung eine Breite einer unteren Fläche des ersten Gleitabschnitts in der ersten Richtung von oben nach unten abnimmt.

9. Richtungseingabevorrichtung nach einem der Ansprüche 1 bis 7, wobei
der erste Gleitabschnitt einen vorstehenden Abschnitt (6) beinhaltet, der in der ersten Richtung von einer Seitenfläche des ersten Gleitabschnitts vorsteht, wobei der vorstehende Abschnitt einen Teil einer unteren Fläche des ersten Gleitabschnitts ausbildet.

10. Richtungseingabevorrichtung nach einem der Ansprüche 1 bis 7, wobei
bei Betrachtung in der zweiten Richtung eine untere Fläche (12) des ersten Gleitabschnitts aus einem zentralen Bereich (12c), einem äußeren Bereich (12e), der über dem zentralen Bereich und an einer äußeren Seite des zentralen Bereichs bereitgestellt ist, und einem Verbindungsbereich (12d), der sich zwischen dem zentralen Bereich und dem äußeren Bereich befindet, gebildet ist,
der Verbindungsbereich in Bezug auf den zentralen Bereich nach oben geneigt ist, und
der äußere Bereich in Bezug auf den Verbindungsbereich an einer Grenze zwischen dem äußeren Bereich und dem Verbindungsbereich nach unten geneigt ist.

11. Richtungseingabevorrichtung nach einem der Ansprüche 1 bis 7, ferner umfassend eine Stützplatte (95), die in Kontakt mit dem ersten Gleitabschnitt kommt, wobei
während der erste Gleitabschnitt von einem Anfangswinkel zu einem vorgeschriebenen Winkel gekippt wird, ein Kontakt, der sich in einem Bereich ganz außen befindet, in dem der erste Gleitabschnitt und die Stützplatte miteinander in Kontakt kommen, in einer identischen Position verbleibt oder sich kontinuierlich bewegt, und
wenn der erste Gleitabschnitt über den vorgeschriebenen Winkel hinaus gekippt wird, sich der Kontakt ungleichmäßig nach außen bewegt.

12. Steuerung (110), umfassend:
die Richtungseingabevorrichtung nach einem der Ansprüche 1 bis 11; und
ein Steuerungsgehäuse (3), in dem die Richtungseingabevorrichtung bereitgestellt ist, wobei
die zweite Gleitfläche eine teilweise kugelförmige Form ist, die so ausgebildet ist, dass der Eingabeabschnitt in Bezug auf ein virtuelles Zentrum geneigt ist, und
das virtuelle Zentrum sich an der Außenseite des Steuerungsgehäuses befindet.

13. Steuerung (110), umfassend:
die Richtungseingabevorrichtung nach einem der Ansprüche 1 bis 11; und
ein Steuerungsgehäuse (3), in dem die Richtungseingabevorrichtung bereitgestellt ist, wobei
die zweite Gleitfläche eine teilweise kugelförmige Form ist, die so ausgebildet ist, dass der Eingabeabschnitt in Bezug auf ein virtuelles Zentrum geneigt ist, und
das virtuelle Zentrum sich an der Außenseite der Richtungseingabevorrichtung und im Inneren des Steuerungsgehäuses befindet.

14. Steuerung nach Anspruch 12 oder 13, wobei
sowohl die erste Gleitfläche als auch die zweite Gleitfläche auf einer Rückfläche des Steuerungsgehäuses ausgebildet ist.

15. Steuerung nach Anspruch 12 oder 13, wobei
die zweite Gleitfläche auf einer Rückfläche des Steuerungsgehäuses ausgebildet ist und die erste Gleitfläche auf einer unteren Fläche des zweiten Gleitabschnitts ausgebildet ist.

## Revendications

1. Dispositif d'entrée de direction (100) comprenant :
une partie d'entrée (1) comportant une partie actionnée (41) et un arbre (42) qui s'étend vers le bas depuis la partie actionnée ;
une première partie coulissante (10) qui coulisse dans une première direction en réponse à la partie d'entrée s'inclinant depuis une position initiale dans la première direction, la première partie coulissante étant dotée d'un premier trou (19) à travers lequel l'arbre passe, le premier trou s'étendant dans une seconde direction perpendiculaire à la première direction ;
une seconde partie coulissante (20) qui coulisse dans la seconde direction en réponse à la partie d'entrée s'inclinant depuis la position initiale dans la seconde direction, la seconde partie coulissante étant dotée d'un second trou (29) à travers lequel l'arbre passe, le second trou s'étendant dans la première direction ;
une première surface de coulissement (71) qui s'étend dans la première direction, la première surface de coulissement étant sous une forme incurvée de façon convexe vers le haut, la première partie coulissante coulissant sur la première surface de coulissement alors que la première partie coulissante vient en butée sur la première surface de coulissement depuis le dessous ;
une seconde surface de coulissement (72) qui s'étend dans la seconde direction, la seconde surface de coulissement étant sous une forme incurvée de façon convexe vers le haut, la seconde partie coulissante coulissant sur la seconde surface de coulissement alors que la seconde partie coulissante vient en butée sur la seconde surface de coulissement depuis le dessous ; et
une partie de sollicitation de coulissement (9) disposée sous la première partie coulissante et la seconde partie coulissante, la partie de sollicitation de coulissement sollicitant la première partie coulissante vers le haut depuis le dessous en pressant la première partie coulissante contre la première surface de coulissement et en sollicitant la seconde partie coulissante vers le haut depuis le dessous en pressant la seconde partie coulissante contre la seconde surface de coulissement.

2. Dispositif d'entrée de direction selon la revendication 1, dans lequel
la partie de sollicitation de coulissement est un ressort présentant une ligne axiale identique à une ligne axiale de l'arbre en tant qu'axe central.

3. Dispositif d'entrée de direction selon la revendication 2, dans lequel le ressort est un ressort hélicoïdal conique.

4. Dispositif d'entrée de direction selon la revendication 3, dans lequel le ressort hélicoïdal conique augmente en diamètre vers le haut depuis le dessous.

5. Dispositif d'entrée de direction selon l'une quelconque des revendications 1 à 4, comprenant en outre une base (50) sur laquelle une extrémité inférieure de l'arbre coulisse, la base étant disposée dans un espace entouré par la partie de sollicitation de coulissement.

6. Dispositif d'entrée de direction selon la revendication 5, comprenant en outre un commutateur (4) disposé au-dessous de la base, le commutateur recevant l'entrée par enfoncement de la partie d'entrée vers le bas.

7. Dispositif d'entrée de direction selon la revendication 5 ou 6, comprenant en outre une partie de sollicitation de base (87) qui sollicite la base vers le haut.

8. Dispositif d'entrée de direction selon l'une quelconque des revendications 1 à 7, dans lequel lorsqu'elle est vue dans la seconde direction, une largeur d'une surface inférieure de la première partie coulissante dans la première direction diminue vers le bas depuis le dessus.

9. Dispositif d'entrée de direction selon l'une quelconque des revendications 1 à 7, dans lequel
la première partie coulissante comporte une partie en saillie (6) qui fait saillie dans la première direction depuis une surface latérale de la première partie coulissante, la partie en saillie formant une partie d'une surface inférieure de la première partie coulissante.

10. Dispositif d'entrée de direction selon l'une quelconque des revendications 1 à 7, dans lequel
lorsqu'elle est vue dans la seconde direction, une surface inférieure (12) de la première partie coulissante est composée d'une région centrale (12c), d'une région externe (12e) disposée au-dessus de la région centrale et sur un côté externe de la région centrale, et d'une région de raccordement (12d) située entre la région centrale et la région externe,
la région de raccordement est inclinée vers le haut par rapport à la région centrale, et
la région externe est inclinée vers le bas par rapport à la région de raccordement au niveau d'une limite entre la région externe et la région de raccordement.

11. Dispositif d'entrée de direction selon l'une quelconque des revendications 1 à 7, comprenant en outre une plaque de support (95) en contact avec la première partie coulissante, dans lequel
alors que la première partie coulissante est inclinée d'un angle initial vers un angle prescrit, un contact situé le plus à l'extérieur dans une région où la première partie coulissante et la plaque de support sont en contact l'une avec l'autre reste au niveau d'une position identique ou se déplace en continu, et
lorsque la première partie coulissante est inclinée au-delà de l'angle prescrit, le contact se déplace de façon discontinue vers l'extérieur.

12. Dispositif de commande (110) comprenant :
le dispositif d'entrée de direction selon l'une quelconque des revendications 1 à 11 ; et
un boîtier de dispositif de commande (3) dans lequel le dispositif d'entrée de direction est fourni, dans lequel
la seconde surface de coulissement est sous une forme partiellement sphérique formée de sorte que la partie d'entrée soit inclinée par rapport à un centre virtuel, et
le centre virtuel est situé sur l'extérieur du boîtier de dispositif de commande.

13. Dispositif de commande (110) comprenant :
le dispositif d'entrée de direction selon l'une quelconque des revendications 1 à 11 ; et
un boîtier de dispositif de commande (3) dans lequel le dispositif d'entrée de direction est fourni, dans lequel
la seconde surface de coulissement est une forme partiellement sphérique formée de sorte que la partie d'entrée soit inclinée par rapport à un centre virtuel ; et
le centre virtuel est situé sur l'extérieur du dispositif d'entrée de direction et dans l'intérieur du boîtier de dispositif de commande.

14. Dispositif de commande selon la revendication 12 ou 13, dans lequel
chacune de la première surface de coulissement et de la seconde surface de coulissement est formée sur une surface arrière du boîtier de dispositif de commande.

15. Dispositif de commande selon la revendication 12 ou 13, dans lequel
la seconde surface de coulissement est formée sur une surface arrière du boîtier de dispositif de commande et la première surface de coulissement est formée sur une surface inférieure de la seconde partie coulissante.
